(19) Europäisches Patentamt
European Patent Office
Office européen des brevets

(11) **EP 2 088 408 B1**

(12) **EUROPÄISCHE PATENTSCHRIFT**

(45) Veröffentlichungstag und Bekanntmachung des Hinweises auf die Patenterteilung:
**21.04.2010 Patentblatt 2010/16**

(51) Int Cl.:
*G01H 1/00* *(2006.01)*    *G01H 3/08* *(2006.01)*

(21) Anmeldenummer: **09151313.5**

(22) Anmeldetag: **26.01.2009**

(54) **Verfahren zur Bestimmung der Anteile einzelner Übertragungswege zum betriebsbedingten Gesamtgeräusch einer schallübertragenden Struktur**

Method for determining the proportions of individual transfer paths to the operation-related total noise of a sound conveying structure

Procédé de détermination des proportions de trajets individuels de transmission dans le bruit total dû au fonctionnement d'une structure acoustiquement transmissive

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **08.02.2008 AT 2102008**

(43) Veröffentlichungstag der Anmeldung:
**12.08.2009 Patentblatt 2009/33**

(73) Patentinhaber: **AVL List GmbH**
**8020 Graz (AT)**

(72) Erfinder:
• **Höldrich, Robert**
**8010 Graz (AT)**

• **Sontacchi, Alois**
**8112 Gratwein (AT)**
• **Brandl, Stephan**
**8010 Graz (AT)**

(74) Vertreter: **Babeluk, Michael**
**Patentanwalt**
**Mariahilfer Gürtel 39/17**
**1150 Wien (AT)**

(56) Entgegenhaltungen:
**EP-A- 1 296 126          WO-A-2007/062447**
**JP-A- 2004 085 235**

**Beschreibung**

Die Erfindung betrifft ein Verfahren zur Bestimmung der Anteile einzelner Übertragungswege zum betriebsbedingten Gesamtgeräusch einer schallübertragenden Struktur, insbesondere eines Fahrzeuges.

Die Schwingungs- bzw. Krafteinleitung und Übertragung in einer schallübertragenden Struktur, wie beispielsweise einer Fahrzeugkarosserie wird üblicherweise mittels der sogenannten "Transfer-Pfad-Analyse" (TPA - **T**ransfer **P**ath **A**nalysis) durchgeführt. Dabei werden für die Krafteinleitungspunkte in die Karosserie die Eingangsinertanzen, sowie die Übertragungsfunktionen von den Krafteinleitungspunkten zu Mikrophonen im Fahrzeuginneren und/oder Schwingungsmesspunkten an der Karosserie mittels externer Anregung (Shaker, Hammer, etc.) gemessen. Die Auswirkungen der realen Anregungen im Fahrzeugbetrieb auf die Fahrzeugkarosserie wird durch Messung der Beschleunigungen im Fahrzeugbetrieb an den Krafteinleitungspunkten und unter Verwendung der zuvor gemessenen Inertanzen und Übertragungsfunktionen ermittelt. Eine der zeitraubendsten und fehleranfälligsten Aufgaben bei der Anwendung einer Transfer-Pfad-Analyse ist die Messung von Inertanzen und Frequenzgang-Funktionen zwischen Schalleinleitungsposition und Schallempfangsposition (siehe z.B. WO 2007/062447 A). Es ist daher ein großes Bedürfnis, die Nachteile dieser zeitraubenden Messungen zu vermeiden.

Aus der AT 500.798 A2 ist ein Verfahren zur möglichst genauen Ermittlung der Kräfte an den Krafteinleitungspunkten einer Fahrzeugkarosserie in Bezug auf das Antriebsaggregat und die Radaufhängungen bekannt. Mittels dieser Kräfte und der Schwingungsübertragungseigenschaften einer Fahrzeugkarosserie ist es möglich, die genauen Geräusch- und Schwingungsanteile von Antriebsstrang und Radaufhängung des Fahrzeuges am Innengeräusch und am Schwingungsverhalten der Karosserie zu bestimmen.

Aufgabe der Erfindung ist es daher, die genannten Nachteile zu vermeiden und eine schnelle, sowie genaue Berechnung der Kräfte und Anteile einzelner Übertragungswege zum Gesamtgeräusch bereitzustellen.

Erfindungsgemäß wird dies durch folgende Schritte erreicht:

a) Definieren zumindest einer Schalleinleitungsposition in der schallübertragenden Struktur;

b) Applizieren zumindest eines Beschleunigungsaufnehmers und/oder zumindest eines Quellmikrophons im Bereich jeder Schalleinleitungsposition;

c) Definieren zumindest einer Empfangsposition;

d) Applizieren zumindest eines Zielmikrophons oder mindestens eines Beschleunigungsaufnehmers im Bereich der Empfangsposition;

e) Durchführen zumindest einer gleichzeitigen Messung des Schalldruckes oder der Beschleunigung an der Empfangsposition und der Beschleunigung und vorzugsweise des Schalldruckes an jeder Schalleinleitungsposition während des Betriebes;

f) Ermittlung zumindest einer Beschleunigung-zu-Druck- oder Beschleunigung-zu-Beschleunigung-Empfindlichkeitsfunktion und vorzugsweise zumindest einer Druck-zu-Druck-Empfindlichkeitsfunktion auf Basis der Messung unter e) ;

g) Ermittlung von reziprok gemessenen Frequenzgangfunktionen zwischen jeder Schalleinleitungsposition und jeder Empfangsposition;

h) Ermittlung der Inertanzen im Betriebszustand, zumindest an einer Schalleinleitungsposition, auf der Basis der reziprok gemessenen Frequenzgangfunktionen und der Beschleunigung-zu-Druck- bzw. Beschleunigung-zu-Beschleunigung-Empfindlichkeitsfunktionen;

i) Ermittlung zumindest einer Kraft an zumindest einer Schalleinleitungsposition auf Basis der berechneten Inertanzen und der im Betrieb gemessenen Beschleunigungen an den Schalleinleitungspositionen.

j) Ermittlung der Anteile der einzelnen Übertragungswege aufgrund der berechneten Kräfte und der reziprok gemessenen Frequenzgangfunktionen, sowie vorzugsweise aufgrund der Druck-zu-Druck-Empfindlichkeitsfunktionen und der im Betrieb gemessenen Schalldrücke an den Schalleinleitungspositionen.

Gemäß dem erfindungsgemäßen Verfahren werden Inertanzen auf der Basis zumindest einer operativen Messung im Betriebszustand und unmittelbar daran anschließenden reziprok gemessenen Frequenzgang-Funktionen zwischen der Schallquelle, also der Schalleinleitungsposition und dem Ziel, also der Empfangsposition, berechnet. Diese errechneten Inertanzen können in weiterer Folge dazu verwendet werden, um auftretende Kräfte im Betriebszustand festzustellen. Die Verwendung dieser auftretenden Kräfte erlaubt die Bestimmung und das Identifizieren von Beiträgen der entsprechenden Schallquellen auf den Schalldruck bzw. die Beschleunigung an den Empfangspositionen.

Eine wesentliche Verbesserung der Ergebnisse der Berechnung ergibt sich, wenn die Erregung aller Quellen durch das Messen der Beschleunigungen oder Schall- drücke nahe an allen definierten Schalleinleitungspositionen abgedeckt wird. Das Auslassen von nur einer wichtigen Schallquelle würde zu falschen Empfindlichkeits-Funktionen und Inertanzen führen. Zusätzlich wird angenommen, dass die Beschleunigung-zu-Schalldruck- bzw. Beschleunigung-zu-Beschleunigung-Empfindlichkeitsfunktionen für alle Messungen im Betriebszustand zeitinvariant sind. Weil Position und Richtung der Beschleunigungsmesser konstant sind, bedeutet das zur Erfüllung dieser Annahme, dass die Temperatur der Struktur (z.B. des Chassis bei einem Fahrzeug), während des Messens in den Betriebszuständen so konstant wie nur möglich sein soll. Eine Vorwärmung der Struktur vor dem Messbeginn ist deshalb vorteilhaft.

Falls Luftschallübertragung vorliegt, ist es für die Verbesserung der Qualität des Messergebnisses vorteilhaft, wenn Druck-zu-Druck bzw. Druck-zu-Beschleunigung-Empfindlichkeits-Funktionen für den gesamten Luftschall zwischen den Schalleinleitungspositionen und den Empfangspositionen ermittelt werden und auf der Basis der Druck-zu-Druck- bzw. Druck-zu-Beschleunigung-Empfindlichkeits-Funktionen und des im Betrieb gemessenen Schalldruckes an den Schalleinleitungspositionen die Luftschall-Anteile am gesamten Schalldruck bzw. an der gesamten Beschleunigung an der Empfangsposition ermittelt und vom gesamten Schalldruck bzw. der gesamten Beschleunigung an der Empfangsposition subtrahiert werden.

In der Ausführungsvariante der Erfindung ist vorgesehen, dass die Beschleunigung-zu-Druck- bzw. Beschleunigung-zu-Beschleunigung-Empfindlichkeit für jede Empfangsposition ermittelt und bei der Berechnung der Inertanzen berücksichtigt wird.

Ein wesentlicher Schritt des Verfahrens sieht vor, dass auf der Basis der ermittelten Inertanzen eine dynamische Massenmatrix errechnet wird. Dadurch ist es in weiterer Folge möglich, dass auf der Basis der dynamischen Massenmatrix die an den Schalleinleitungspositionen auftretenden Kräfte im Betriebszustand berechnet werden und dass die Anteile der einzelnen Übertragungswege aller Körperschall-Quellen auf der Basis der Kräfte an den Schalleinleitungspositionen im Betriebszustand, sowie den entsprechenden Frequenzgang-Funktionen ermittelt werden.

Das erfindungsgemäße Verfahren erlaubt die Berechnung von Inertanzen aus den Messungen im Betriebszustand und den reziprok gemessenen Frequenzgang-Funktionen zwischen Schalleinleitungsposition und Empfangsposition. Die Vorteile dieser neuen Methode bestehen in einer gravierenden Zeiteinsparung und im Vermeiden von, bei Inertanz- und Frequenzgang-Messungen auftretenden, allgemeinen Fehlern. Während der Zeiteinsparungsaspekt dieser Methode offensichtlich ist, wird die Zunahme der Qualität des Ergebnisses im Folgenden noch näher beschrieben.

Wie zuvor erwähnt, entstehen die häufigsten Fehler bei der Durchführung einer Transfer-Pfad-Analyse bei der Messung der Inertanzen und bei der Messung der Frequenzgang-Funktionen von der Quelle (Schalleinleitungsposition, Erregungsposition) zum Ziel (Empfangsposition).

Diese Störungen sind größtenteils abhängig von:

-   Abweichungen in der Erregungsrichtung,

-   Abweichungen in der Erregungsposition, sowie von

-   unterschiedlichen Strukturtemperaturen zwischen der im Voraus stattfindenden Vermessung von Inertanzen bzw. Frequenzgang-Funktionen und der Messung im operativen Zustand.

Durch Verwendung von reziprok gemessenen Frequenzgang-Funktionen wird die Abweichung in der Erregungsrichtung beseitigt, weil die Richtung der Kraft der gemessenen Frequenzgang-Funktionen identisch mit der Messrichtung des Beschleunigungsaufnehmers ist. Weiters ist es einfacher, einen Beschleunigungsaufnehmer nahe an dem Ursprung der erregenden Quellen zu platzieren als einen Shaker oder einen Hammer zur externen Erregung dort zu platzieren, um die Inertanzen und die Frequenzgang-Funktionen zu messen. Dadurch wird der Fehler, der durch Abweichung von der Schalleinleitungsposition verursacht wird, mit dem vorliegenden Verfahren vermindert.

Außerdem wird der Fehler, der auf Temperaturunterschieden basiert, durch das reziproke Messen verringert, wenn die reziproke Messung der Frequenzgang-Funktionen zwischen Schalleinleitungsposition und Empfangsposition direkt nach der operativen Messung des Schalldruckes und der Schallbeschleunigung durchgeführt wird. Dadurch können Probleme, die auf dem Unterschied der Temperatur zwischen der operativen und der Inertanzmessung, bzw. der Frequenzgang-Messungen basieren, beseitigt werden.

Das Messverfahren das für das beschriebene Transfer-Pfad-Analyse-Verfahren benötigt wird, enthält eine Messung im Betriebszustand und eine reziproke Messung der Frequenzgang-Funktionen zwischen Quelle und Ziel. Die Messungen im Betriebszustand können in der gleichen Weise durchgeführt werden, wie für eine konventionelle Transfer-Pfad-Analyse-Messung. Neben den reziprok gemessenen Frequenzgang-Funktionen von der Erregungsposition der betrachteten Kräfte (Beschleunigungsmesserpositionen) zu den Empfangspositionen kann zusätzlich die Druck-zu-Druck- bzw. Druck-zu-Beschleunigung-Empfindlichkeits-Funktion von den Quellmikrophonen zu den Zielmikrophonen im Verfahren verwendet werden. Jedes mögliche Verfahren zum Ermitteln dieser Empfindlichkeitsfunktionen kann dabei angewendet werden.

Nach der Messung sind die folgenden Frequenzgang-Funktionen und operativen Daten verfügbar:

- Messung im Betriebszustand

  o Schalldruck bzw. Beschleunigung an den Empfangspositionen während des Betriebszustandes

  o Schalldruck an den Quellmikrophonen während des Betriebszustandes

  o Beschleunigungen an den Schalleinleitungspositionen während des Betriebszustandes

  o [optional] Druck-zu-Druck- bzw. Druck-zu-Beschleunigung-Empfindlichkeitsfunktionen für den gesamten Luftschall zwischen Schallquellen und Empfangspositionen

- reziprok gemessene Frequenzgang-Funktionen

  o Frequenzgang-Funktionen von Quellpositionen zu den Empfangspositionen

Die Erfindung wird im Folgenden an Hand eines Beispieles näher erläutert:

Für ein tieferes Verständnis des entwickelten Verfahrens wird im Folgenden eine schrittweise Beschreibung der Theorie angegeben. Dabei werden zugunsten geringerer Komplexität im unten angeführten Beispiel nur Luftschall-Empfangspositionen im Innenraum verwendet. Daher wird nur mit Schalldruck und nicht mit Beschleunigungen an den Empfangspositionen gerechnet. Eine Berechnung mit Beschleunigungen kann aber ident ausgeführt werden. Es wird bei gleichzeitiger Verwendung von Beschleunigungen und Schalldrücken an den Empfangspositionen jedoch eine Skalierung der Matrizen als sinnvoll erachtet.

Zur näheren Erklärung kann der Schalldruck $p_{tot}$ am Zielmikrophon aufgeteilt werden in einen Körperschallanteil $p_{SB}$ und einen Luftschallanteil $p_{AB}$, wie in der Gleichung (1) angegeben ist:

$$p_{tot} = p_{SB} + p_{AB} \qquad\qquad (1)$$

$P_{tot}$...Gesamter Schalldruck
$P_{SB}$...Körperschallanteil am gesamten Schalldruck
$p_{AB}$...Luftschallanteil am gesamten Schalldruck

**Schritt 1.1 - Ermittlung der Beschleunigung-zu-Druck-Empfindlichkeit S unter Beseitigung des Luftschall-Anteils**

Wenn Druck-zu-Druck-Empfindlichkeiten bekannt sind, kann eine Trennung zwischen den Körperschallanteilen $p_{SB}$ und den Luftschallanteilen $p_{AB}$ durchgeführt werden. Wegen der Tatsache, dass nur der gesamte Ziel-Schalldruck bei der Messung während des Betriebszustandes gemessen werden kann und die benötigten Inertanzen aus den operativen Daten berechnet werden, müssen die Luftschall-Anteile $p_{AB}$ am gesamten Schalldruck $p_{tot}$ eliminiert werden. Um den Luftschall-Anteil $p_{AB}$ am gesamten Ziel-Schalldruckpegel $p_{tot}$ zu berechnen, werden die bekannten Druck-zu-Druck-Empfindlichkeitsfunktionen mit dem gemessenen Schalldruck an den entsprechenden Quellmikrophonen multipliziert. Diese berechneten Luftschall-Anteile $p_{AB}$ werden dann vom gesamten Ziel-Schalldruckpegel $p_{tot}$ subtrahiert.

Wie beschrieben, wird angenommen, dass die Beschleunigung-zu-Druck-Empfindlichkeitsfunktion S für die zu prüfende Struktur unabhängig von der Zeit ist.

Aus Berechnungsgründen wird die Transformation vom Zeit- in den Frequenzbereich unter Verwendung von möglicherweise überlappenden kurzen Zeitsignalblöcken durchgeführt. Die empfohlene Blockgröße hängt von der maximalen Länge der erwarteten Impulsantworten der gesuchten Empfindlichkeiten beziehungsweise Frequenzgang-Funktionen ab. Die Auswahl der verwendeten Zeitposition der Signalblöcke sollte eine weitgehende statistische Unabhängigkeit der unterschiedlichen Signalblöcke garantieren können.

In der Gleichung (2) wird die resultierende Gleichung für eine beliebige Frequenz f angegeben. Bei der untersuchten Frequenz f repräsentiert das zweite Argument t die Zeitstempel der verschiedenen Signalblöcke (mit t=1..m). Um gesicherte Ergebnisse zu erhalten, ist eine Überbestimmung der Gleichung zu empfehlen. Dieses System kann zum Beispiel unter Verwendung einer Singulärwertzerlegung (SVD) gelöst werden.

$$p_{SB\,i}(t) = \boxed{\phantom{xxxxxxx}} \cdots \boxed{\phantom{xxxx}}$$

$$
\begin{bmatrix} p_{SB\,i}(f,t_1) \\ \vdots \\ \vdots \\ p_{SB\,i}(f,t_m) \end{bmatrix}
=
\begin{bmatrix} a_1(f,t_1) & \cdots & a_n(f,t_1) \\ \vdots & & \vdots \\ a_1(f,t_m) & \cdots & a_n(f,t_m) \end{bmatrix}
\cdot
\begin{bmatrix} p_{SB\,i}/a_1\,(f) \\ \vdots \\ p_{SB\,i}/a_n\,(f) \end{bmatrix}
=
$$

$$
=
\begin{bmatrix} a_1(f,t_1) & \cdots & a_n(f,t_1) \\ \vdots & & \vdots \\ a_1(f,t_m) & \cdots & a_n(f,t_m) \end{bmatrix}
\cdot
\begin{bmatrix} S(i,1,f) \\ \vdots \\ S(i,n,f) \end{bmatrix}
\qquad (2)
$$

$i$...Position des Antwortmi krophons
$f$...Betrachtete Frequenz
$t_1...t_m$...Betrachteter Signalblock
$a_1...a_n$... Betrachtete Beschleunigung
$S(i,j,f)$...Beschleunigung zu Schalldruck Empfindlichkeit für Antwortmik rophon $i$ und Beschleunigung $j$ bei Frequenz $f$

**Schritt 1.2 - Ermittlung der Beschleunigung-zu-Druck-Empfindlichkeit S ohne Beseitigung des Luftschall-Anteils (alternativ zu Schritt 1.1)**

Wenn keine Druck-zu-Druck-Empfindlichkeit bekannt ist, so können alternativ zu Schritt 1.1 die Empfindlichkeiten Beschleunigung-zu-Druck, S, und Druck-zu-Druck gleichzeitig berechnet werden. Die Berechnung der erforderlichen Signale im Frequenzbereich kann wie in Schritt 1.1 erfolgen. Neben den verwendeten Beschleunigungen müssen Schalldrücke $p_s$ an den Quellpositionen betrachtet werden. Die resultierende Gleichung ist in (3) angegeben. Um Fehler zu vermeiden, die auf Unterschiede in der Größe zwischen Schalldruck und Beschleunigung basieren, sollte der Skalierungseffekt berücksichtigt werden.

$$P_{tot\,i}(t) = \boxed{\phantom{xxxxxxxxxx}} \cdots \boxed{\phantom{xxxxx}}$$

$$
\begin{bmatrix} p_{tot\,i}(f,t_1) \\ \vdots \\ \vdots \\ p_{tot\,i}(f,t_m) \end{bmatrix}
=
\begin{bmatrix} a_1(f,t_1) & \cdots & a_n(f,t_1) & p_{S1}(f,t_1) & p_{Sl}(f,t_1) \\ \vdots & & \vdots & & \\ a_1(f,t_m) & \cdots & a_n(f,t_m) & p_{S1}(f,t_m) & p_{Sl}(f,t_m) \end{bmatrix}
\cdot
\begin{bmatrix} S(i,1,f) \\ \vdots \\ S(i,n,f) \\ D(i,1,f) \\ D(i,l,f) \end{bmatrix}
\qquad (3)
$$

*i*...Position des Antwortmikrophons

1...*m*...Betrachteter Zeitblock

1...*n*...Betrachtete Beschleunigungen

1...*l*...Betrachtete Quellmikrophone

$S(i,j,f)$...Beschleunigung-zu-Schalldruck-Empfindlichkeit für Antwortmikrophon *i* und Beschleunigung *j* bei Frequenz *f*

$p_{sh}$...Schalldrudck am Quellmikrophon *h*

$D(i,h,f)$...Schalldruck -zu-Schalldruck -Empfindlichkeit für Antwortmikrophon *i* und Quellmikrophon *h* bei Frequenz *f*

**Schritt 2 - Ermittlung von Inertanzen**

Nachdem man die Beschleunigung-zu-Druck-Empfindlichkeiten, S - wie in Schritt 1.1 beziehungsweise in Schritt 1.2 (abhängig von der Existenz von Druck-zu-Druck-Empfindlichkeiten) beschrieben - berechnet hat, können die benötigten Inertanzen, also die Quotienten aus Beschleunigungsamplitude und Kraft berechnet werden.

Basierend auf der Reziprozitätsregel sind die reziprok gemessene Frequenzgang-Funktion und die Frequenzgang-Funktion im Betriebszustand gleich zu setzen. Für die Ermittlung von Inertanzen können die reziprok gemessenen Frequenzgang-Funktionen folglich mit den im Betrieb wirkenden Frequenzgang-Funktionen verglichen werden. Die entsprechende Gleichung ist in (4) angegeben und ist Komponentenweise zu lesen.

$$\frac{\bar{a}_{rec}}{\dot{Q}_{i\,rec}}(f) \equiv \frac{p_{i_{op}}}{\bar{F}_{op}}(f) \qquad (4)$$

$\bar{a}_{rec}$...Beschleunigungen während der Reziprokmessung in Richtung $\bar{F}_{op}$

$Q_{irec}$ ...Volumenbeschleunigung während der Reziprokmessung am Antwortmikrofon *i*

$p_{i_{op}}$...Schalldruck am Antwortmikrofon *i* im Betriebszustand

$\bar{F}_{op}$...Vektor der eingeleiteten Kräfte im Betriebszustand

Die im Betriebszustand wirkenden Frequenzgang-Funktionen können im Allgemeinen durch den Zusammenhang in Gleichung (5) beschrieben werden. Neben den Beschleunigung-zu-Druck-Empfindlichkeiten S, die in Schritt 1.1 oder in Schritt 1.2 berechnet werden, werden in Gleichung (5) die gesuchten Inertanzen verwendet:

$$\frac{p_{i_{op}}}{\bar{F}_{op}}(f) = \frac{p_{i_{op}}}{\bar{a}_{op}}(f) \cdot \frac{\bar{a}_{op}}{\bar{F}_{op}}(f) \qquad (5)$$

$p_{iop}$...Schalldruck am Antwortmikrofon *i* im Betriebszustand (5)

$\bar{a}_{op}$...Beschleunigungen im Betriebszustand

$\bar{F}_{op}$...Vektor der im Betriebszustand eingeleiteten Kräfte

Um die gesuchten Inertanzen zu berechnen, werden die Frequenzgang-Funktionen im Betriebszustand durch die reziprok gemessenen Frequenzgang-Funktionen ersetzt, wie in Gleichung (6) angegeben ist:

$$\frac{\bar{a}_{rec}}{\dot{Q}_{i\,rec}}(f) \equiv \frac{p_{i_{op}}}{\bar{a}_{op}}(f) \cdot \frac{\bar{a}_{op}}{\bar{F}_{op}}(f) \qquad (6)$$

$\bar{a}_{rec}$...Beschleunigungen während der Reziprokmessung in Richtung $\bar{F}_{op}$

$Q_{irec}$...Volumenbeschleunigung während der Reziprokmessung am Antwortmikrofon *i*

$p_{i_{op}}$...Schalldruck am Antwortmikrofon *i* im Betriebszustand

$\bar{a}_{op}$...Beschleunigungen im Betriebszustand

$\bar{F}_{op}$...Vektor eingeleiteter Kräfte im Betriebszustand

Unter Anwendung der Gleichung (6) können Inertanzen aus der in Schritt 1.1 bzw. Schritt 1.2 ermittelten Beschleunigung-zu-Druck-Empfindlichkeit S und den reziprok gemessenen Frequenzgang-Funktionen berechnet werden. Diese Methode kann für jede mögliche Zahl an Freiheitsgraden durchgeführt werden. Die Methode wird an Hand eines Beispieles mit drei Kräften und drei Beschleunigungen (z.B. Erregung bei einem Lager) in Gleichung (7) gezeigt.

$$
\begin{bmatrix} \dfrac{a_{1\,rec}}{\dot{Q}_{i\,rec}}(f) \\[2mm] \dfrac{a_{2\,rec}}{\dot{Q}_{i\,rec}}(f) \\[2mm] \dfrac{a_{3\,rec}}{\dot{Q}_{i\,rec}}(f) \end{bmatrix}^{T} = \begin{bmatrix} S(i,1,f) & S(i,2,f) & S(i,3,f) \end{bmatrix} \cdot \begin{bmatrix} \dfrac{a_{11}}{\bar{F}_1}(f) & \dfrac{a_{12}}{\bar{F}_2}(f) & \dfrac{a_{13}}{\bar{F}_3}(f) \\[2mm] \dfrac{a_{21}}{\bar{F}_1}(f) & \dfrac{a_{22}}{\bar{F}_2}(f) & \dfrac{a_{23}}{\bar{F}_3}(f) \\[2mm] \dfrac{a_{31}}{\bar{F}_1}(f) & \dfrac{a_{32}}{\bar{F}_2}(f) & \dfrac{a_{33}}{\bar{F}_3}(f) \end{bmatrix} =
$$

$$
= \begin{bmatrix} S(i,1,f) & S(i,2,f) & S(i,3,f) \end{bmatrix} \cdot \begin{bmatrix} I_{11}(f) & I_{12}(f) & I_{13}(f) \\ I_{21}(f) & I_{22}(f) & I_{23}(f) \\ I_{31}(f) & I_{32}(f) & I_{33}(f) \end{bmatrix} \qquad (7)
$$

$\bar{F}_j$...Kraft in Richtung $j$
$a_{kj}$...Beschleunigung in Richtung $k$ verursacht durch Kraft $j$
$I_{kj}$...Inertanz zwischen Beschleunigung $k$ und Kraft $j$

Aus Berechnungsgründen müssen in diesem Fall neun Inertanzen berechnet werden. Folglich sind neun lineare Gleichungen für eindeutige Resultate notwendig. Um diese Anzahl an Gleichungen zu erhalten, müssen reziprok gemessene Frequenzgang-Funktionen an drei Zielmikrophonpositionen i=1..3 vorhanden sein. Die Positionen der Zielmikrophone müssen dabei so gewählt werden, dass die entsprechenden Schalldrucksignale von einander ausreichend statistisch unabhängig sind. Die statistische Unabhängigkeit hängt von der Wellenzahl k und dem Abstand r zwischen den Zielmikrophonpositionen zusammen, wobei $\sin kr / kr \leq 0.5$ empfohlen wird. Betrachtet man eine Frequenz von 100 Hz, so ist etwa 1m zwischen den Zielmikrophonen erforderlich.

Für die Berechnung werden für jede Frequenz f alle Inertanzen in einem Vektor aufgelistet, und es wird eine passende Matrix, welche die Werte der Beschleunigung-zu-Druck-Empfindlichkeiten S enthält, aufgestellt. Die resultierende Beziehung wird in Gleichung (8) angegeben:

$$
\begin{bmatrix} \dfrac{a_{1\,rec}}{\dot{Q}_{1\,rec}}(f) \\[1mm] \dfrac{a_{2\,rec}}{\dot{Q}_{1\,rec}}(f) \\[1mm] \dfrac{a_{3\,rec}}{\dot{Q}_{1\,rec}}(f) \\[1mm] \dfrac{a_{1\,rec}}{\dot{Q}_{2\,rec}}(f) \\[1mm] \dfrac{a_{2\,rec}}{\dot{Q}_{2\,rec}}(f) \\[1mm] \dfrac{a_{3\,rec}}{\dot{Q}_{2\,rec}}(f) \\[1mm] \dfrac{a_{1\,rec}}{\dot{Q}_{3\,rec}}(f) \\[1mm] \dfrac{a_{2\,rec}}{\dot{Q}_{3\,rec}}(f) \\[1mm] \dfrac{a_{3\,rec}}{\dot{Q}_{3\,rec}}(f) \end{bmatrix}^{T} = \begin{bmatrix} I_{11}(f) \\ I_{12}(f) \\ I_{13}(f) \\ I_{21}(f) \\ I_{22}(f) \\ I_{23}(f) \\ I_{31}(f) \\ I_{32}(f) \\ I_{33}(f) \end{bmatrix}^{T} \cdot \begin{bmatrix} S(1,1,f) & 0 & 0 & S(2,1,f) & 0 & 0 & S(3,1,f) & 0 & 0 \\ 0 & S(1,1,f) & 0 & 0 & S(2,1,f) & 0 & 0 & S(3,1,f) & 0 \\ 0 & 0 & S(1,1,f) & 0 & 0 & S(2,1,f) & 0 & 0 & S(3,1,f) \\ S(1,2,f) & 0 & 0 & S(2,2,f) & 0 & 0 & S(3,2,f) & 0 & 0 \\ 0 & S(1,2,f) & 0 & 0 & S(2,2,f) & 0 & 0 & S(3,2,f) & 0 \\ 0 & 0 & S(1,2,f) & 0 & 0 & S(2,2,f) & 0 & 0 & S(3,2,f) \\ S(1,3,f) & 0 & 0 & S(2,3,f) & 0 & 0 & S(3,3,f) & 0 & 0 \\ 0 & S(1,3,f) & 0 & 0 & S(2,3,f) & 0 & 0 & S(3,3,f) & 0 \\ 0 & 0 & S(1,3,f) & 0 & 0 & S(2,3,f) & 0 & 0 & S(3,3,f) \end{bmatrix} \qquad (8)
$$

Um die Zahl an erforderlichen Zielmikrophonen zu verringern, kann die angenommene Symmetrie der Inertanz Matrix ausgenutzt werden. Folglich müssen anstelle von $M^2$ Inertanzen nur noch $(M^2/2 + M/2)$ Elemente berechnet werden. Die Formel für den verringerten Satz von Inertanzen ist in Gleichung (9) angegeben. Für diese Gleichung ist die Matrix der Beschleunigung-zu-Druck-Empfindlichkeiten durch Aufsummieren von zwei symmetrischen Inertanzen in einer Reihe berechnet.

$$
\begin{bmatrix}
\dfrac{a_{1\,rec}}{\dot{Q}_{1\,rec}}(f) \\[2mm]
\dfrac{a_{2\,rec}}{\dot{Q}_{1\,rec}}(f) \\[2mm]
\dfrac{a_{3\,rec}}{\dot{Q}_{1\,rec}}(f) \\[2mm]
\dfrac{a_{1\,rec}}{\dot{Q}_{2\,rec}}(f) \\[2mm]
\dfrac{a_{2\,rec}}{\dot{Q}_{2\,rec}}(f) \\[2mm]
\dfrac{a_{3\,rec}}{\dot{Q}_{2\,rec}}(f)
\end{bmatrix}^{T}
=
\begin{bmatrix}
I_{11}(f) \\
I_{12}(f) \\
I_{13}(f) \\
I_{22}(f) \\
I_{23}(f) \\
I_{33}(f)
\end{bmatrix}^{T}
\cdot
\begin{bmatrix}
S(1,1,f) & 0 & 0 & S(2,1,f) & 0 & 0 \\
S(1,2,f) & S(1,1,f) & 0 & S(2,2,f) & S(2,1,f) & 0 \\
S(1,3,f) & 0 & S(1,1,f) & S(2,3,f) & 0 & S(2,1,f) \\
0 & S(1,2,f) & 0 & 0 & S(2,2,f) & 0 \\
0 & S(1,3,f) & S(1,2,f) & 0 & S(2,3,f) & S(2,2,f) \\
0 & 0 & S(1,3,f) & 0 & 0 & S(2,3,f)
\end{bmatrix}
\qquad (9)
$$

Nachdem man die Inertanzen I berechnet hat, kann eine dynamische Massenmatrix errechnet werden, indem man die Inertanz Matrix invertiert. Um die Kräfte im Betriebszustand zu erhalten, muss die errechnete dynamische Massenmatrix mit den Beschleunigungen im Betriebszustand multipliziert werden. Die Multiplikation der Kräfte mit den entsprechenden Frequenzgang-Funktionen erbringt die gesuchten Beiträge aller Körperschall-Quellen.

**Patentansprüche**

1. Verfahren zur Bestimmung der Anteile einzelner Übertragungswege zum betriebsbedingten Gesamtgeräusch einer schallübertragenden Struktur, insbesondere eines Fahrzeuges, mit folgenden Schritten:

a) Definieren zumindest einer Schalleinleitungsposition in der schallübertragenden Struktur;
b) Applizieren zumindest eines Beschleunigungsaufnehmers und vorzugsweise zumindest eines Quellmikrophons im Bereich jeder Schalleinleitungsposition;
c) Definieren zumindest einer Empfangsposition;
d) Applizieren zumindest eines Zielmikrophons oder mindestens eines Beschleunigungsaufnehmers im Bereich der Empfangsposition;
e) Durchführen zumindest einer gleichzeitigen Messung des Schalldruckes oder der Beschleunigung an der Empfangsposition und der Beschleunigung und vorzugsweise des Schalldruckes an jeder Schalleinleitungsposition während des Betriebes;
f) Ermittlung zumindest einer Beschleunigung-zu-Druck- oder Beschleunigung-zu-Beschleunigung-Empfindlichkeitsfunktion und vorzugsweise zumindest einer Druck-zu-Druck-Empfindlichkeitsfunktion auf Basis der Messung unter e) ;
g) Ermittlung von reziprok gemessenen Frequenzgangfunktionen zwischen jeder Schalleinleitungsposition und jeder Empfangsposition;
h) Ermittlung der Inertanzen im Betriebszustand, zumindest an einer Schalleinleitungsposition, auf der Basis der reziprok gemessenen Frequenzgangfunktionen und der Beschleunigung-zu-Druck- bzw. Beschleunigung-zu-Beschleunigung-Empfindlichkeitsfunktionen;
i) Ermittlung zumindest einer Kraft an zumindest einer Schalleinleitungsposition auf Basis der berechneten Inertanzen und der im Betrieb gemessenen Beschleunigungen an den Schalleinleitungspositionen.
j) Ermittlung der Anteile der einzelnen Übertragungswege aufgrund der berechneten Kräfte und der reziprok gemessenen Frequenzgangfunktionen, sowie vorzugsweise aufgrund der Druck-zu-Druck-Empfindlichkeitsfunktionen und der im Betrieb gemessenen Schalldrücke an den Schalleinleitungspositionen.

2. Verfahren nach Anspruch 1, **dadurch gekennzeichnet, dass** Schritt g) unmittelbar anschließend an die Schritte e) und f) durchgeführt wird.

3. Verfahren nach Anspruch 1 oder 2, **dadurch gekennzeichnet, dass** zumindest eine Druck-zu-Druck-Empfindlichkeitsfunktion und/oder Druck-zu-Beschleunigung-Empfindlichkeitsfunktion für den gesamten Luftschall zwischen der Schalleinleitungsposition und der Empfangsposition ermittelt wird.

4. Verfahren nach Anspruch 3, **dadurch gekennzeichnet, dass** auf der Basis der vorliegenden Druck-zu-Druck-Empfindlichkeits-Funktion und/oder Druck-zu-Beschleunigung-Empfindlichkeitsfunktion und des gemessenen Schalldruckes an den Schalleinleitungspositionen der Luftschall-Anteil und/oder der Beschleunigungs-Anteil am gesamten Schalldruck bzw. der gesamten Beschleunigung an der Empfangsposition ermittelt und vom gesamten Schalldruck bzw. der gesamten Beschleunigung an der Empfangsposition subtrahiert wird.

5. Verfahren nach Anspruch 1 oder 2, **dadurch gekennzeichnet, dass** - für den Fall, dass keine Druck-zu-Druck-Empfindlichkeits-Funktion bzw. Druck-zu-Beschleunigung-Empfindlichkeitsfunktion für die Luftschall-Übertragung zwischen der Schalleinleitungsposition und der Empfangsposition vorliegt - die Druck-zu-Druck-Empfindlichkeits-Funktion bzw. Druck-zu-Beschleunigung-Empfindlichkeitsfunktion zusammen mit der Beschleunigung-zu-Schalldruck- bzw. Beschleunigung-zu-Beschleunigung-Empfindlichkeitsfunktion ermittelt wird.

6. Verfahren nach einem der Ansprüche 1 bis 5, **dadurch gekennzeichnet, dass** die Beschleunigung-zu-Druck- und/oder Beschleunigung-zu-Beschleunigung-Empfindlichkeit für jede Empfangsposition ermittelt und bei der Berechnung der Inertanzen berücksichtigt wird.

7. Verfahren nach einem der Ansprüche 1 bis 6, **dadurch gekennzeichnet, dass** auf der Basis der ermittelten Inertanzen eine dynamische Massenmatrix errechnet wird.

8. Verfahren nach Anspruch 7, **dadurch gekennzeichnet, dass** auf der Basis der dynamischen Massenmatrix die an den Schalleinleitungspositionen auftretenden Kräfte im Betriebszustand berechnet werden.

9. Verfahren nach Anspruch 8, **dadurch gekennzeichnet, dass** die Anteile der einzelnen Übertragungswege aller Körperschall-Quellen auf der Basis der Kräfte an den Schalleinleitungspositionen im Betriebszustand, sowie den entsprechenden Frequenzgang-Funktionen ermittelt werden.

**Claims**

1. Method for determining the contributions of individual transmission paths to the operation-dependent total noise of a sound transmitting structure, especially a vehicle, comprising the following steps:

    a) Defining at least one sound input position on the sound transmitting structure;
    b) Applying at least one acceleration sensor and preferably at least one source microphone in the area of each sound input position;
    c) Defining at least one receiving position;
    d) Applying at least one target microphone or at least one acceleration sensor in the area of the receiving position;
    e) Carrying out at least one simultaneous measurement of sound pressure or acceleration at the receiving position, and of acceleration and preferably sound pressure at each sound input position during operation of the vehicle;
    f) Determining at least one acceleration-to-pressure or acceleration-to-acceleration sensitivity function and preferably at least one pressure-to-pressure sensitivity function based on the measurements carried out under e);
    g) Determining reciprocally measured frequency response functions between each sound input position and each receiving position;
    h) Determining inertances in the operational state, for at least one sound input position, based on the reciprocally measured frequency response functions and acceleration-to-pressure sensitivity functions or acceleration-to-acceleration sensitivity functions;
    i) Determining at least one force at at least one sound input position, based on the computed inertances and accelerations measured during operation at the sound input positions;
    j) Determining the contributions of the individual transmission paths based on the computed forces and the reciprocally measured frequency response functions, and preferably based on pressure-to-pressure sensitivity functions and the sound pressures measured during operation at the sound input positions.

**2.** Method according to claim 1, **characterised in that** step g) is carried out immediately after steps e) and f).

**3.** Method according to claim 1 or 2, **characterised in that** at least one pressure-to-pressure sensitivity function or pressure-to-acceleration sensitivity function is determined for the total air-borne sound between the sound input position and the receiving position.

**4.** Method according to claim 3, **characterised in that** the air-borne sound component or acceleration component of total sound pressure or total acceleration at the receiving position is determined using the given pressure-to-pressure or pressure-to-acceleration sensitivity function and the measured sound pressure at the sound input positions, and subtracting the air-borne sound or acceleration component from total sound pressure or total acceleration at the receiving position.

**5.** Method according to claim 1 or 2, **characterised in that** - in case no pressure-to-pressure sensitivity function or pressure-to-acceleration sensitivity function is given for air-borne sound transmission between sound input position and receiving position - the pressure-to-pressure or pressure-to-acceleration sensitivity function is determined together with the acceleration-to-sound pressure or acceleration-to-acceleration sensitivity function.

**6.** Method according to any of claims 1 to 5, **characterised in that** the acceleration-to-pressure or acceleration-to-acceleration sensitivity is determined for each receiving position and used in the computation of inertances.

**7.** Method according to any of claims 1 to 6, **characterised in that** a dynamical mass matrix is computed, which is based on the inertances determined.

**8.** Method according to claim 7, **characterised in that** the forces arising at the sound input positions in the operational state are computed based on the dynamical mass matrix.

**9.** Method according to claim 8, **characterised in that** the contributions of the individual transmission paths of all structure-borne sound sources are determined based on the forces at the sound input positions in the operational state and on corresponding frequency response functions.

**Revendications**

**1.** Procédé de détermination des proportions de trajets individuels de transmission dans le bruit total dû au fonctionnement d'une structure acoustiquement transmissive, en particulier d'un véhicule, comprenant les étapes suivantes :

a) définition au moins d'une position d'introduction de bruit dans la structure acoustiquement transmissive ;
b) application au moins d'un capteur d'accélération et, de préférence, au moins d'un microphone de source, dans la zone de chaque position d'introduction de bruit ;
c) définition au moins d'une position de réception ;
d) application au moins d'un microphone directionnel, ou d'au moins un capteur d'accélération, dans la zone de la position de réception ;
e) accomplissement au moins d'une mesure simultanée de la pression acoustique ou de l'accélération à la position de réception et de l'accélération et, de préférence, de la pression acoustique à chaque position d'introduction du bruit pendant le fonctionnement ;
f) détermination au moins d'une fonction de sensibilité accélération-pression ou accélération-accélération et, de préférence, au moins d'une fonction de sensibilité pression-pression, d'après la mesure effectuée à e) ;
g) détermination de fonctions de réponse en fréquence mesurées réciproquement, entre la position d'introduction du bruit et chaque position de réception ;
h) détermination des inertances à l'état de fonctionnement, au moins en une position d'introduction du bruit, d'après les fonctions de réponse en fréquence mesurées réciproquement et les fonctions de sensibilité accélération-pression ou accélération-accélération ;
i) détermination au moins d'un effort en au moins une position d'introduction du bruit, d'après les inertances calculées et les accélérations mesurées en fonctionnement, aux positions d'introduction du bruit ;
j) détermination des proportions des trajets individuels de transmission, d'après les efforts calculés et les fonctions de réponse en fréquence mesurées réciproquement, ainsi que, de préférence, d'après les sensibilités pression-pression et les pressions acoustiques mesurées en fonctionnement aux positions d'introduction du bruit.

2. Procédé selon la revendication 1, **caractérisé en ce que** l'étape g) est effectuée immédiatement après les étapes e) et f).

3. Procédé selon la revendication 1 ou 2, **caractérisé en ce qu'**au moins une fonction de sensibilité pression-pression ou pression-accélération est déterminée pour le son aérien global, entre la position d'introduction de bruit et la position de réception.

4. Procédé selon la revendication 3, **caractérisé en ce que** la proportion de son aérien et/ou la proportion d'accélération sur la pression acoustique globale ou l'accélération globale à la position de réception est/sont déterminée(s) d'après la présente fonction de sensibilité pression-pression ou fonction de sensibilité pression-accélération et d'après la pression acoustique mesurée aux positions d'introduction du bruit, et est soustraite de la pression acoustique globale ou de l'accélération globale à la position de réception.

5. Procédé selon la revendication 1 ou 2, **caractérisé en ce que** - pour le cas dans lequel il n'y a aucune fonction de sensibilité pression-pression ou fonction de sensibilité pression-accélération pour la transmission de son aérien entre la position d'introduction du bruit et la position de réception - la fonction de sensibilité pression-pression ou fonction de sensibilité pression-accélération est déterminée conjointement avec la fonction de sensibilité accélération-son aérien ou accélération-accélération.

6. Procédé selon l'une quelconque des revendications 1 à 5, **caractérisé en ce que** la sensibilité accélération-pression et/ou accélération-accélération est déterminée pour chaque position de réception et prise en considération lors du calcul des inertances.

7. Procédé selon l'une quelconque des revendications 1 à 6, **caractérisé en ce qu'**une matrice de masse dynamique est calculée d'après les inertances déterminées.

8. Procédé selon la revendication 7, **caractérisé en ce que** les efforts se produisant aux positions d'introduction de bruit, à l'état de fonctionnement, sont calculés d'après la matrice de masse dynamique.

9. Procédé selon la revendication 8, **caractérisé en ce que** les proportions des trajets individuels de transmission de toutes les sources de sons solidiens sont déterminées d'après les efforts appliqués aux positions d'introduction de bruit à l'état de fonctionnement, ainsi que d'après les fonctions de réponse en fréquence correspondantes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007062447 A

- AT 500798 A2